# EUROPEAN PATENT APPLICATION

(11) **EP 1 186 344 A2**
(43) Date of publication of application: **13.03.2002**
(21) Application number: 01307715.1
(22) Date of filing: 11.09.2001
(51) Int. Cl.: B01J 20/26, B01J 20/28, E02B 3/12

(54) **Water absorber and method for fabricating the same**

(30) Priority: 12.09.2000 JP 2000276712; 22.09.2000 JP 2000289167
(71) Applicant: SONY CORPORATION, Tokyo (JP)
(72) Inventor: Inagaki, Yasuhito, Shinagawa-ku, Tokyo (JP); Watanabe, Haruo, Shinagawa-ku, Tokyo (JP); Noguchi, Tsutomu, Shinagawa-ku, Tokyo (JP)
(74) Representative: Sexton, Jane Helen

(57) **Abstract**

A water absorber for absorbing and removing water remaining on floors resulting from leakage or flooding, and comprising a water-permeable casing made of cotton cloth filled with an antibacterial water-absorbing agent comprised of a modified polymer compound. The water absorber absorbs water to swell. The water absorber is filled with the antibacterial water-absorbing agent, and therefore, even after absorbing water, the water absorber is not under unsanitary conditions such that bacteria propagate. When the water absorber is dried, it regains water-absorbing property and can be reused as a water absorber. The antibacterial water-absorbing agent (modified polymer compound) is produced by subjecting to acid treatment and metal-salt forming treatment a scrap material of typical organic resins, such as an ABS resin, and has a nitrile group, a hydrolysis product of the nitrile group, and an acid group introduced as a substituent in the form of a metal salt.

## Description

The present invention relates to a water absorber used for removing residual water which results from leakage or flooding, and more particularly to a water absorber having a function as a sandbag which is used in levee raising for preventing rivers from overflowing as well as prevention of collapse of banks and repair thereof.

As materials for water absorbers used for removing unnecessary residual water that results from leakage or flooding, fibrous materials, such as cloth, have been conventionally used. In addition, water absorbers having a function as sandbags are materials used in Civil Engineering for preventing flood damage, e.g., preventing rivers, lakes, and marshes from overflowing. A conventional water absorber having a function of a sandbag is prepared by, for example, filling a jute bag with sand. In this case, the water absorber having a function of a sandbag is large in weight and volume and hard to carry. Therefore, they are generally prepared on site. When they are carried from long distance, vehicles must be used and therefore burdensome operations including a carrying as well as loading and unloading operations are required. When a disaster occurs, it is necessary to fast deploy water absorbers having a function of sandbag to the required sitein order to protect human life and property against flood damage.

However, the above-mentioned conventional water absorber has the following problems to be solved.

A first problem is such that conventional water absorbers including those having a function of sandbags have poor antibacterial property, so that, when absorbing water and then left in this condition, bacteria proliferate in the absorbers, resulting in bad sanitary conditions.

A second problem is such that a water absorber made of fibrous material, which has been conventionally used for absorbing and removing water that results from leakage, has a poor water-absorbing property, and therefore a considerably large amount of water absorbers are needed for absorbing a small amount of water.

A third problem is such that, in the case in which the water absorbers are used as sandbags, the sandbags are large in weight and bulky and therefore, as mentioned above, it has conventionally been required to prepare them by hand near the disaster site at a time when the disaster occurs. Thus, a problem has been encountered that the productivity is low and a required number of sandbags cannot be provided immediately in case emergencies occur. That is, the sandbags are materials that are necessary to protect people's lives and properties in emergencies, such as flood damage, and it is important that they can be easily prepared and rapidly provided.

Therefore, instead of such handmade sandbags, sandbags small in weight and volume, which have been produced so that they can be easily carried and rapidly used in emergencies and which increase in weight and volume during use, are desired.

A fourth problem is such that, when a conventional water absorber absorbs water, it is hardly reused even after dried.

A fifth problem is such that in conventional water absorbers, especially in water absorbers made of fibrous materials, it is difficult to utilize scrap materials to prepare them, that is, the conventional water absorbers are not recycled products, and thus resources from the Earth cannot be efficiently utilized.

It is desirable to provide a water absorber which is advantageous not only in that it has an optimum water-absorbing property and optimum antibacterial property after absorbing water, but also in that it is small in weight and volume during the transportation, absorbs water to increase in weight and volume during use, has optimum external shape conformation property and, further, can be used as a sandbag.

It is also desirable to provide a water absorber which is advantageous not only in that it can be repeatedly used by drying the water absorber which has absorbed water, but also in that it is produced utilizing scrap of organic polymers as well as scrap of inorganic solid materials recovered from waste which is difficult to be disposed of, thus making it possible to contribute to the preservation of the environment.

It is also desirable to provide a water absorber that is easily carried and can satisfactorily cope with overflowing, etc., in the actual use.

It is also desirable to provide a water absorber that is small in weight and volume during the transportation and absorbs water to increase in weight and volume during the use, and further has optimum external shape conformation property and a function of removing unnecessary water or a function as a sandbag.

Also, it is advantageous that it is provided a water absorber that can be repeatedly used.

It is also preferable to effectively utilize scrap of polymers or scrap of inorganic solid materials that are difficult to be disposed of, so as to contribute to the preservation of the environment.

The water absorber according to a first embodiment of the present invention includes a water-permeable bag-shaped casing and an antibacterial water-absorbing agent in the water-permeable bag-shaped casing, the antibacterial water-absorbing agent having a modified polymer compound obtained from a raw material which includes an organic polymer material comprising acrylonitrile and at least one unit selected from the group of styrene and a conjugated diene, the modified polymer compound having an acid group introduced therein as a substituent, the acid group having the form of a metal salt.

A method for producing a water absorber according to the first embodiment of the present invention is a method for producing a water absorber which comprises a water-permeable bag-shaped casing and an antibacterial water-absorbing agent in the water-permeable bag-shaped casing, the antibacterial water-absorbing agent comprising a modified polymer compound obtained from a raw material which comprises an organic polymer material comprising acrylonitrile and at least one unit selected from the group consisting of styrene and a conjugated diene, the method comprising: an acid treatment step for reacting the organic polymer material with an acid to introduce an acid group as a substituent into the organic polymer material; and a metal treatment step for reacting the organic polymer material obtained in the acid treatment step with a metal salt to form a metal salt of the acid group.

For solving the problems related with the related art, a water absorber according to a second embodiment of the present invention includes a water-permeable bag-shaped casing and a water-absorbing polymer (water-absorbing resin) in form of small pieces including a powder form and a particulate form enclosed (sealed) in the water-permeable bag-shaped casing, wherein the water-absorbing polymer is a modified polymer obtained by subjecting to acid treatment a polymer material comprising acrylonitrile and at least one unit selected from the group consisting of styrene and a conjugated diene, the modified polymer absorbs water to be gelled, wherein at least one component selected from the group consisting of the water-permeable bag-shaped casing and the water-absorbing polymer contains a surfactant. The above polymer material comprises both acrylonitrile and at least one unit selected from styrene and a conjugated diene.

It is preferred that the water absorber further includes, in the water-permeable bag-shaped casing, a solid material having a specific gravity of 1 or more in form of small pieces including a powder form and a particulate form. In addition, it is desired that the surfactant is an anionic surfactant and/or a nonionic surfactant.

Further, the surfactant is preferably contained in an amount of 0.01 to 10 parts by weight, especially preferably 0.1 to 5 parts by weight, relative to 100 parts by weight of the water-absorbing polymer in dry state and relative to 100 parts by weight of the water-permeable bag-shaped casing in dry state. When the surfactant content exceeds the upper limit of the above range, the surfactant is possibly liberated from the water-absorbing polymer and water-permeable bag-shaped casing after the water absorber absorbs water, disadvantageously causing pollution of the outside of the water absorber. On the other hand, the surfactant content is smaller than the lower limit of the above range, the effect of improving the water-absorbing property of the water-absorbing polymer and water-permeable bag-shaped casing (increasing the water-absorbing rate) aimed at by addition of the surfactant cannot be obtained.

The polymer material preferably contains 5 to 80 % by mole of an acrylonitrile unit, more preferably 10 to 60 % by mole of an acrylonitrile unit, especially preferably 20 to 50 % by mole of an acrylonitrile unit. In addition, the polymer material desirably contains 20 to 95 % by mole of at least one unit selected from the group consisting of styrene and a conjugated diene, more desirably 40 to 85 % by mole of at least one unit selected from the group consisting of styrene and a conjugated diene, especially desirably 50 to 80 % by mole of at least one unit selected from the group consisting of styrene and a conjugated diene.

Further, it is preferred that the polymer material contains carbon black or titanium oxide. In addition, it is preferred that the water-absorbing polymer (modified polymer) is obtained from a starting material which comprises a polymer material from scrap material, including acrylonitrile and at least one unit selected from the group consisting of styrene and a conjugated diene.

As for attaining the above object, a method for producing a water absorber according to the second embodiment of the present invention is a method for producing a water absorber which comprises a water-permeable bag-shaped casing and a water-absorbing polymer in form of small pieces including a powder form and a particulate form enclosed in the water-permeable bag-shaped casing, the method comprising: subjecting to acid treatment a polymer material in form of small pieces, comprising acrylonitrile and at least one unit selected from the group consisting of styrene and a conjugated diene to obtain a water-absorbing polymer which is a modified polymer capable of absorbing water to be gelled; and enclosing the resultant water-absorbing polymer in form of small pieces in a water-permeable bag-shaped casing, which, before the enclosing step, a surfactant is incorporated into at least one component selected from the group consisting of the water-absorbing polymer and the water-permeable bag-shaped casing.

In this method, it is preferred that the water-absorbing polymer in form of small pieces is enclosed in the water-permeable bag-shaped casing together with a solid material having a specific gravity of 1 or more in form of small pieces including a powder form and a particulate form. In addition, it is preferred that the polymer material in form of small pieces contains carbon black or titanium oxide. Further, it is preferred that the surfactant is an anionic surfactant and/or a nonionic surfactant. Furthermore, it is preferred that the amount of the surfactant added to the water-absorbing polymer or water-permeable bag-shaped casing is in the above-mentioned range. In addition, it is preferred that the water-absorbing polymer (modified polymer) is obtained from a starting material which comprises a polymer material from scrap material, comprising acrylonitrile and at least one unit selected from the group consisting of styrene and a conjugated diene. Further, it is preferred that the polymer material contains an acrylonitrile unit and a styrene unit and/or a conjugated diene unit in the above range of 20 to 95% by mole.

By employing the above-mentioned construction, there can be provided a water absorber that is small in weight and volume during the transportation and absorbs water to increase in weight and volume during the use, and further has optimum external shape conformation property and a function of removing unnecessary water or a function as a sandbag. In addition, by improving the water-absorbing rate of the above water absorber, it is possible to cope with the urgency of use thereof. Further, utilization as resources of scrap polymers or scrap inorganic solid materials that are difficult to be disposed of contributes to the preservation of the environment.

According to a third embodiment of the present invention, there is provided a water absorber comprising a water-permeable bag-shaped casing filled with a water-absorbing resin, the water-absorbing resin being a modified polymer obtained by subjecting to acid treatment a polymer material comprising acrylonitrile and at least one unit selected from the group consisting of styrene and a conjugated diene, the modified polymer absorbing water to be gelled, the water-absorbing resin having an average particle diameter of 5 mm or less in dry state.

In this embodiment, the water-absorbing resin absorbs unnecessary residual water that results from leakage or flooding and, as a result, increases in volume and weight.

In addition, there is provided a method for producing a water absorber which comprises a water-permeable bag-shaped casing filled with a water-absorbing resin, the method including: subjecting to acid treatment a polymer material comprising acrylonitrile and at least one unit selected from the group consisting of styrene and a conjugated diene; and fine graining the water-absorbing resin obtained by the acid treatment so that the resultant water-absorbing resin has an average particle diameter of 5 mm or less in dry state.

By the above method, there can be produced a water absorber which has absorbed unnecessary residual water which results from leakage or flooding, and thus increases in volume and weight.

### The invention is illustrated by the following drawings:

Fig. 1A is a diagrammatic cross-sectional view of a water absorber according to Embodiment 1, showing the construction of the water absorber, and Fig. 1B is a diagrammatic cross-sectional view of the water absorber according to Embodiment 1 which has absorbed water to swell;
Fig. 2A is a diagrammatic cross-sectional view of a water absorber (sandbag) according to Embodiment 2, showing the construction of the water absorber, and Fig. 2B is a diagrammatic cross-sectional view of the water absorber (sandbag) according to Embodiment 2 which has absorbed water to swell;
Fig. 3A is a diagrammatic cross-sectional view of a water absorber according to Embodiment 3 before absorbing water, showing the construction of the water absorber, and Fig. 3B is a diagrammatic cross-sectional view of the water absorber according to Embodiment 3 after absorbing water;
Fig. 4A is a diagrammatic cross-sectional view of a water absorber according to Embodiment 4 before absorbing water, showing the construction of the water absorber, and Fig. 4B is a diagrammatic cross-sectional view of the water absorber according to Embodiment 4 after absorbing water;
Fig. 5A is a diagrammatic cross-sectional view of a water absorber according to Embodiment 5 before absorbing water, showing the structure of the water absorber, and Fig. 5B is a diagrammatic cross-sectional view of the water absorber according to Embodiment 5 after absorbing water; and
Fig. 6A is a diagrammatic cross-sectional view of a water absorber according to Embodiment 6 before absorbing water, showing the structure of the water absorber, and Fig. 6B is a diagrammatic cross-sectional view is a diagrammatic cross-sectional view of the water absorber according to Embodiment 6 after absorbing water.

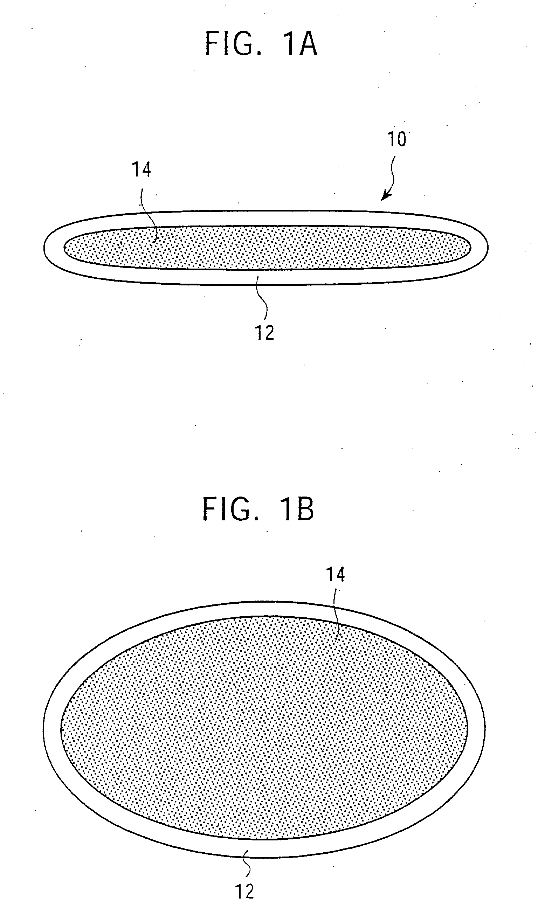

One embodiment of the present invention will be described with reference to Fig. 1A to Fig. 2B.

In this embodiment, since a modified polymer compound has an unreacted nitrile group, not only can insolubility of a water absorber in water be improved upon absorbing water, but also gel strength can be improved. In addition, by virtue of having a group formed by hydrolysis of a nitrile group, the water-absorbing property of a water-absorbing agent is improved, and further, by virtue of having an acid group introduced as a substituent into styrene and/or a conjugated diene in the form of a metal salt, optimum antibacterial property and optimum water-absorbing property are imparted to the water absorber.

In this embodiment, the antibacterial water-absorbing agent, i.e., an antibacterial modified polymer compound is an essential component, but an additional water-absorbing agent solely having a water-absorbing property can be used in combination with the antibacterial modified polymer compound.

As an additional water-absorbing agent, a known water-absorbing material can be used, but, for achieving effective utilization of scrap organic polymer materials, which is one preferred feature of this embodiment, it is preferred to use the additional water-absorbing agent having an ionic group as a substituent introduced by an acid treatment, which is obtained from a raw material which comprises an organic polymer material comprising acrylonitrile and at least one unit selected from the group consisting of styrene and a conjugated diene recovered from scrap materials.

In this embodiment, by employing the above-mentioned construction, a water absorber which is small in weight and volume during transportation and which absorbs water to remarkably increase in weight and volume during use and which further has optimum external shape conformation property, or a water absorber which can be used as a sandbag is realized.

In addition, since an antibacterial water-absorbing agent is used, it is possible to prevent propagation of bacteria in the water absorber that had absorbed water. Therefore, not only can the water absorber be prevented from being under unsanitary conditions such that putrid odor is generated, bacteria proliferate, the propagation of bacteria causes discoloration, and "slime" occurs by the bacteria, but also the surface and interior portions of the water absorber can be prevented from suffering change in property.

Further, since the water absorber does not change in property, it can be repeatedly used by drying the water absorber that has absorbed water. Furthermore, the water absorber can be produced utilizing, as resources, scrap organic polymer compounds and scrap inorganic solid materials which are difficult to be disposed of, thus making it possible to contribute to the preservation of the environment.

### (1) Raw material of antibacterial water-absorbing agent

A starting material of a modified polymer compound constituting the antibacterial water-absorbing agent comprises an organic polymer material including acrylonitrile and at least one unit selected from the group consisting of styrene and a conjugated diene.

It is desired that the organic polymer material will contain an acrylonitrile unit in an amount range of from 5 to 80 % by mole, preferably 10 to 60 % by mole, more preferably 20 to 50 % by mole.

When the content of the acrylonitrile unit is less than 5 % by mole, the organic polymer material is water-soluble when it is subjected to acid treatment, so that it is difficult to form an antibacterial water-absorbing agent having insolubility in water. On the other hand, when the content of the acrylonitrile unit exceeds 80% by mole, the organic polymer material becomes rigid and it is difficult to grind the organic polymer material into small pieces, and further, the content of at least one of styrene and a conjugated diene in the organic polymer material becomes small and an introduction rate of an ionic group (acid group) is lowered, so that it is difficult to impart optimum antibacterial property to the water absorber.

In other words, in this embodiment, for introducing an ionic acid group as a substituent into the organic polymer material by an acid treatment, as a constituent unit of the organic polymer material other than acrylonitrile, at least one unit selected from the group consisting of styrene and a conjugated diene is required.

The acid group improves the water-absorbing property of the modified polymer compound, especially the water-absorbing property to an aqueous electrolyte solution, and serves as a site on which a metal ion for imparting an antibacterial property is carried.

It is desired that the organic polymer material contains at least one unit selected from the group consisting of styrene and a conjugated diene in an amount range of from 20 to 95% by mole, preferably 40 to 85% by mole, more preferably 50 to 80% by mole. Examples of conjugated dienes include butadiene and isoprene.

Further, other constituent units may be contained in the organic polymer material or a scrap material of the organic polymer material as long as acrylonitrile and at least one unit selected from the group consisting of styrene and a conjugated diene are contained in the predetermined amounts.

Examples of other constituent units include maleic anhydride, itaconic anhydride, -methylstyrene, acrylamide, methacrylamide, acrylic acid, acrylates (saturated and unsaturated hydrocarbons having 1 to 10 carbon atoms), methacrylic acid, methacrylates (saturated and unsaturated hydrocarbons having 1 to 10 carbon atoms), vinyl acetate, vinyl chloride, ethylene, propylene, butylene, vinylpyrrolidone, and vinylpyridine.

A molecular weight of the organic polymer material which is a starting material of the modified polymer compound is generally in the range of from 1,000 to 20,000,000, advantageously 10,000 to 1,000,000, in terms of weight average molecular weight (Mw).

When the weight average molecular weight of the organic polymer material is less than 1,000, the water-absorbing agent is water-soluble when subjected to acid treatment, so that a water-absorbing agent insoluble in water cannot be obtained. On the other hand, when the weight average molecular weight is higher than 20,000,000, the reaction rate of the acid treatment is lowered, and thus this is disadvantageous from an economical and practical point of view.

As the organic polymer material comprising acrylonitrile and at least one unit selected from the group consisting of styrene and a conjugated diene, there can be preferably used resin polymer materials, such as an ABS resin (acrylonitrile-butadiene-styrene resin), a SAN resin (styrene-acrylonitrile resin), an ASA resin (acrylonitrile-styrene-acrylate resin), and an ACS resin (acrylonitrile-chlorinated polyethylene-styrene resin). Further, rubber polymer materials, such as an NBR (acrylonitrile-butadiene rubber), can be preferably used.

The organic polymer material may be fresh virgin pellets, residual material (fragments) from fabrication process of resins or from a molding process for molded articles, or scrap materials molded for specific use. These used scrap materials mean used scrap materials of, for example, housings, parts, tubes and hoses, and buffers used in electric appliances and automobiles.

Sources of scrap materials can be factories, stores, and homes, but waste recovered from factories and stores are more preferable than general waste from houses because the former generally has a relatively uniform composition.

Further, the organic polymer material may be an alloy with other resins, or a scrap material containing an additive, such as coloring pigment, coloring coating composition, a stabilizer, a flame retardant, a plasticizer, filler, or other auxiliaries. In addition, the organic polymer material may be a mixture of used scrap material and a virgin material.

As the resin that can be mixed into the organic polymer material to form an alloy, a resin that does not inhibit acid treatment is desired, and examples include polyphenylene ether, polycarbonate, polyphenylene sulfide, polyethylene terephthalate, polybutylene terephthalate, polyamide (nylon), and polyester.

It is desired that the resin to be mixed into the organic polymer material is contained in an amount of 60% by weight or less, based on the weight of the organic polymer material. This is because, when the content of such a resin is large, the reaction in the acid treatment is inhibited.

### (2) Pretreatment for organic polymer material

It is desired that the organic polymer material be first ground into small pieces having a size of 3.5 mesh or less before being subjected to acid treatment. When the size of the resultant small pieces is larger than 3.5 mesh, the surface area per unit volume of the organic polymer material which is subjected to the reaction for the acid treatment becomes small and the acid treatment for the organic polymer material is hardly facilitated, so that the reaction time is prolonged and this is disadvantageous from a practical point of view. In addition, the water-absorbing property of the antibacterial water-absorbing agent is markedly lowered.

As examples of methods of grinding the organic polymer material into small pieces, there can be mentioned the followings.

A first grinding method is one in which grinding is conducted using a grinder, followed by sieving. When the organic polymer material contains a rubber component, it is preferred that the organic polymer material is subjected to freezing treatment and then ground by this method.

A second grinding method is one in which heat-melting is conducted, followed by pelletization into a fine beads form.

### (3) Inorganic additive for organic polymer material

When the organic polymer material contains carbon black or titanium oxide as an inorganic additive, the acid treatment is fostered, so that the antibacterial effect and water-absorbing effect of the water-absorbing agent are improved.

The reason for this is that the periphery of the inorganic pigment is acid-treated during the reaction of the acid treatment and the inorganic pigment is easily removed from the organic polymer material, so that the surface of the organic polymer material becomes porous and an acid easily permeates the organic polymer material.

Each of carbon black and titanium oxide may be either contained in the organic polymer material originally or separately added or mixed into the organic polymer material. From the viewpoint of improving the antibacterial property and water-absorbing property of the water-absorbing organic polymer resin which is obtained by converting the organic polymer material to a modified polymer resin, it is desired that the organic polymer material originally containing carbon black or titanium oxide is used because carbon black or titanium oxide is uniformly dispersed.

Carbon black or titanium oxide may be one that is generally used as a coloring agent, reinforcement, and an electric conductivity-imparting agent for plastics.

The content of an inorganic substance, such as carbon black or titanium oxide, in the organic polymer material is in the range of from 0.01 to 20% by weight, preferably 0.05 to 10 % by weight, based on the dry weight of the organic polymer material.

The carbon black may be one that is produced by any of a channel process, a furnace process, and a thermal process, and may be one that is produced by either a single process or a plurality of processes in combination.

The carbon black has an average particle diameter of generally 0.005 to 100 µm, preferably 0.01 to 10 µm.

The titanium oxide may be any of rutile titanium oxide, anatase titanium oxide, and ultrafine titanium, and they may be used individually or in combination.

The titanium oxide has an average particle diameter of generally 0.01 to 50 µm, preferably 0.05 to 10 µm.

### (4) Treatment steps in fabrication process

In this embodiment, the organic polymer material can be converted to an antibacterial water-absorbing agent by subjecting the organic polymer material to acid treatment and the subsequent salt-forming reaction.

Specifically, by the acid treatment, part of the acrylonitrile in the organic polymer material undergoes hydrolysis to form a hydrolysis-product group, and, on the other hand, an acid group is introduced into the styrene and/or conjugated diene. Then, the resultant reaction mixture is contacted with an aqueous solution of a metal salt to effect a salt-forming treatment, so that the acid group introduced can be converted to a salt of a metal, such as silver, copper, or zinc.

### (5) Acid treatment for organic polymer material

In this preferred embodiment of the present invention, as the acid used in the acid treatment step, an inorganic acid is preferred. The amount of the inorganic acid charged is in the range of from 1 to 500 times, preferably 10 to 200 times the weight of the organic polymer material subjected to the acid treatment.

When the amount of the inorganic acid added is less than 1 time the weight of the organic polymer material, the introduction rate of an ionic group into the styrene or conjugated diene and the hydrolysis rate of the acrylonitrile group are lowered, leading to lowering of the forming rate of the acid group which is a site on which an antibacterial-property imparting metal, such as silver, copper, or zinc, is carried, and inhibiting of the formation of a salt of the metal. On the other hand, when the amount of the inorganic acid added is larger than 500 times the weight of the organic polymer material, there is a need to neutralize the excess inorganic acid, and this is disadvantageous from an economic viewpoint and productivity.

### (6) Inorganic acid used in acid treatment

Examples of inorganic acids used in the acid treatment include sulfonating agents, such as concentrated sulfuric acid, sulfuric anhydride, fuming sulfuric acid, and chlorosulfonic acid; nitric acid; fuming nitric acid; phosphoric acid; phosphorus chloride; and phosphorus oxide. Of these, concentrated sulfuric acid, sulfuric anhydride, fuming sulfuric acid, and chlorosulfonic acid are preferred, and especially preferred is concentrated sulfuric acid having a concentration of 70% by weight or more.

Inorganic acids may be used individually or in combination. When two or more inorganic acids are used in combination, they may be either mixed together or successively added.

For example, the organic polymer material is first treated with concentrated sulfuric acid, and then sulfuric anhydride is added thereto to complete the reaction. Thus, a modified polymer compound having optimum form stability and optimum antibacterial property as well as optimum water-absorbing property, i.e, a water-absorbing agent can be obtained in an aqueous system.

This is because, first, the nitrile portion of the organic polymer material mainly undergoes hydrolysis to form a hydrolysis-product group in the treatment with concentrated sulfuric acid, and then, the styrene and/or conjugated diene is forcibly sulfonic-crosslinked in the treatment with sulfuric anhydride to obtain a gel having a high degree of cross linking.

### (7) Acid treatment reaction system using organic solvent

The acid treatment may be conducted either in an inorganic acid or in a reaction system using an organic solvent.

Examples of organic solvents usable as a reaction system include C₁-C₂ aliphatic halogenated hydrocarbons (preferably 1,2-dichloroethane, chloroform, dichloromethane, and 1,1-dichloroethane) and alicyclic hydrocarbons (preferably cyclohexane, methylcyclohexane, and cyclopentane). In addition, examples of organic solvents include nitromethane, nitrobenzene, sulfur dioxide, paraffin hydrocarbons having 1 to 7 carbon atoms, acetonitrile, carbon disulfide, tetrahydrofuran, tetrahydropyran, 1,2-dimethoxyethane, acetone, methyl ethyl ketone, and thiophene. Of these, C₁-C₂ aliphatic halogenated hydrocarbons, alicyclic hydrocarbons, nitromethane, nitrobenzene, and sulfur dioxide are preferred.

These solvents may be used individually or in combination. With respect to the mixing ratio of the above solvents, there is no particular limitation.

It is preferred that the amount of the organic solvent added is less than 200 times the weight of the organic polymer material. When the amount of the organic solvent added is 200 times or more the weight of the organic polymer material, the reaction rate in the acid treatment is lowered, and the cost for the organic solvent increases and this is disadvantageous from an economical point of view.

In the acid treatment, if desired, a Lewis base may be used. Examples of Lewis bases include alkyl phosphates, such as triethyl phosphate and trimethyl phosphate; dioxane; acetic anhydride; ethyl acetate; ethyl palmitate; diethyl ether; and thioxane.

### (8) Conditions for acid treatment

Preferred examples of acid groups introduced into the styrene unit and/or conjugated diene unit by the acid treatment include a sulfonic acid group, a -PO(OH)₂ group, and a -CH₂PO(OH)₂ group. Among these acid groups, a sulfonic acid group is preferred.

When a sulfonic acid group is introduced as an acid group, the organic polymer material and a sulfonating agent, such as concentrated sulfuric acid, sulfuric anhydride, fuming sulfuric acid, or chlorosulfonic acid, are reacted with each other directly or in an organic solvent to introduce a sulfonic acid group into the organic polymer material.

On the other hand, for introducing a -PO(OH)₂ group, diphosphorus trioxide is added to an organic solvent and hydrolyzed.

These acid groups may be introduced into the organic polymer material individually or in combination.

For obtaining satisfactory antibacterial property and water-absorbing property as an antibacterial water-absorbing agent, the content of the ionic group (acid group) in the organic polymer material is 5 to 95% by mole, preferably 10 to 70% by mole, based on the mole of the all monomer units.

When the introduction rate of the acid group is more than 95% by mole, the product of the acid treatment from the organic polymer material is water-soluble and it is difficult to produce an antibacterial water-absorbing agent having optimum form stability. On the other hand, when the introduction rate of the acid group is less than 5% by mole, the water permeability and water-absorbing property (especially to an aqueous electrolyte solution) become poor, and the subsequent salt-formation, for example, an ion-exchange treatment of silver, copper, or zinc, does not proceed, so that the resultant water-absorbing agent is difficult to exhibit optimum antibacterial property.

By performing the acid treatment under the below conditions of reaction temperature and reaction time, the above-mentioned predetermined amount of an ionic group (acid group) can be introduced into the organic polymer material.

The reaction temperature of the acid treatment varies depending on whether an organic solvent is used or not, but it is generally set from 0 to 200°C., preferably 30 to 120°C..

When the reaction temperature is lower than 0°C., the reaction rate slowed and this is disadvantageous from a practical point of view, and further, a water-absorbing agent having optimum water permeability and optimum water-absorbing property cannot be obtained. On the other hand, when the reaction temperature is higher than 200°C., the molecular chain of the organic polymer material is likely to be broken due to thermal decomposition, so that the insolubility of the organic polymer material in water is lowered.

The reaction time largely varies depending on the reaction temperature, but it is generally 1 minute to 40 hours, preferably 5 minutes to 2 hours. When the reaction time is too short, the reaction does not satisfactorily proceed. On the other hand, when the reaction time is too long, the production efficiency is poor.

The inorganic acid and organic solvent used in the above acid treatment may be recovered after the reaction, and used in another reaction as they are or after purified by a stripping or distillation method.

In this embodiment, the organic polymer material is subjected to the above-mentioned acid treatment to introduce into styrene and/or a conjugated diene unit an acid group as a substituent, and, on the other hand, the acrylonitrile unit undergoes hydrolysis to form a hydrolysis-product group, and undergoes amidation, so that the organic polymer material is modified into a hydrophilic polymer compound.

### (9) Salt-forming treatment

Next, in this embodiment, the acid group introduced as a substituent into styrene and/or a conjugated diene unit is neutralized by, for example, a cation comprised mainly of silver, copper, or zinc to form a salt, thus converting the organic polymer material to an antibacterial water-absorbing agent.

In the formation of a metal salt of the acid group, there may be employed either a method in which, first, the reaction product in the acid treatment reaction system is filtered by means of a filter or the like, and washed with a large amount of water, followed by addition of a salt of silver, copper, or zinc or a method in which the acid treatment reaction system is directly added to an aqueous solution of a salt of silver, copper, or zinc.

Organic and inorganic salts other than the above metal salts of silver, copper, and zinc, and hydroxides can also be used.

Examples of such salts and hydroxides include metal compounds, for example, hydroxides, carbonates, acetates, sulfates, phosphates, and organic acid salts of ammonium and metals, such as alkali metals, e.g., sodium, lithium, and potassium; alkaline earth metals, e.g., magnesium and calcium; aluminum; titanium; germanium; tin; and ion.

The reaction product obtained in the above steps is in a gel form, and is then dried by drying in the sun, heating drying, vacuum drying, centrifugal dehydration, or press dehydration to obtain a desired antibacterial water-absorbing resin.

By the above-mentioned treatment method, an antibacterial material having a nitrile group and a group formed by the hydrolysis of the nitrile group as well as an acid group in the form of a salt can be obtained. By virtue of having an unreacted nitrile group, this antibacterial material is improved in insolubility in water and gel strength, and, by virtue of having a group formed by the hydrolysis of the nitrile group and an acid group in the form of a salt, it is improved in water-absorbing property and thus has a property such that it is gelled in water.

### (10) Water-absorbing agent mixed into antibacterial water-absorbing agent

In this embodiment, the water absorber is required to have an antibacterial modified polymer (antibacterial water-absorbing agent), and may further contain, as a water-absorbing agent, a water-absorbing agent solely having a water-absorbing property in combination with the antibacterial water-absorbing agent.

As the water-absorbing agent solely having a water-absorbing property, a known water-absorbing material can be used, but, an organic polymer material comprising acrylonitrile and at least one unit selected from the group consisting of styrene and a conjugated diene is preferred, or it is desired that used scrap materials are utilized to realize effective utilization of the earth's resources, which is one of the objectives of the present invention.

When a water-absorbing agent solely having a water-absorbing property is produced using an organic polymer material comprising acrylonitrile and at least one unit selected from the group consisting of styrene and a conjugated diene or used scrap materials, the organic polymer material may be subjected to acid treatment under the same conditions as those in the above-mentioned acid treatment to produce a water-absorbing agent, and, in the subsequent salt-forming step, a salt other than salts of silver, copper, and zinc may be formed.

### (11) Other antibacterial agent mixed into antibacterial water-absorbing agent

Further, known antibacterial materials, such as inorganic antibacterial materials, organic natural extracted antibacterial materials, and organic synthetic antibacterial materials, can be appropriately used in combination.

Examples of inorganic antibacterial materials include chlorine compounds, such as sodium hypochlorite; peroxides, such as hydrogen peroxide; boric acid compounds, such as boric acid and sodium borate; copper compounds, such as copper sulfate; zinc compounds, such as zinc sulfate and zinc chloride; sulfur compounds, such as sulfur, polysulfide lime, and sulfur hydrate; calcium compounds, such as calcium oxide; silver compounds, such as thiosulfate silver complex salts and silver nitrate; iodine; and sodium silicofluoride.

Examples of organic natural extracted antibacterial materials include hinokitiol, a thick-stemmed bamboo extract, and creosote oil.

Examples of organic aliphatic compound antibacterial materials include organic tin compounds, such as tributyltin oxide; cyclopentane derivatives, such as copper naphthate; halogen compounds, such as methyl bromide; monohydric alcohol compounds, such as ethyl alcohol and isopropyl alcohol; dihydric compounds, such as 2-bromo-2-ntro-1,3-propanediol; saturated aldehydes, such as formaldehyde and glutalaldehyde; and caboxylic acid compounds, such as sorbic acid and potassium sorbate.

Further, examples of organic aliphatic compound antibacterial materials include ether compounds, such as ethylene oxide and propylene oxide; lactone compounds, such as -oxypropiolactone; quaternary ammonium salt compounds, such as [3-(trimethoxysilyl)propyl] dimethyloctadecylammonium chloride; amino acid derivatives, such as di(octylaminoethyl)glycine hydrochloride; sulfonic acid compounds, such as sodium laurylsulfate; and hydroxamic acid compounds, such as bisdequalinium acetate.

Further, examples of organic aliphatic compound antibacterial materials include cyanuric acid compounds, such as chlorinated cyanuric acid; cyanic acid compounds, such as methyl isocyanate; sulfone compounds, such as bis(trichloromethyl) sulfone; guanidine compounds, such as polyhexamethylenebiguanidine hydrochloride; hydantoin compounds, such as 1,3-dichloro-5,5-dimethylhydantoin; dithiol compounds, such as 5-oxy-3,4-dichloro-1,2-dithiol; arsine compounds, such as iron methylarsonate; phosphate compounds, such as aluminum tris(ethylphosphate); and thiocarbamide compounds.

Examples of organic aromatic compound antibacterial materials include carbonate compounds, such as bis(4-nitrophenyl) carbonate; quaternary ammonium salt compounds, such as benzalconium chloride and benzethonium chloride; monoamine compounds, such as 2,6-dichloro-4-nitroaniline; diamine compounds, such as potassium nitroethylbenzylethylenediamine; hydroxylamine compounds, such as aluminum N-nitroso-N-cyclohexylhydroxylamine; anilide compounds, such as dihydromethyloxathin carboxanilidedioxide; imidazole compounds, such as 2-(4-thiazolyl)benzimidazole; and benzothiazole compounds, such as 5-methyl-1,2,4-triazolo-3,4-benzothiazole.

Further, examples of organic aromatic compound antibacterial materials include triazine compounds, such as 2,4-dichloro-6-chloroanilino-1,3,5-triazine; guanidine compounds, such as chlorohexydine hydrochloride and chlorohexydine gluconate; pyridine compounds, such as cetylpyridinium chloride; pyrimidine compounds, such as dimethyl pyrazolylhydroxyphenylpyrimidine; halogenobenzene compounds, such as 2,2L-methylenebis-3,4,6-trichlorophenol; benzenesulfonic acid compounds, such as copper hydroxynonyl benzenesulfonate; benzenecarboxylic acid compounds, such as benzoic acid; mercaptocarboxylic acid compounds, such as thimelosal; and hydroxycarboxylic acid compounds, such as ethyl oxybenzoate.

Further, examples of organic aromatic compound antibacterial materials include monohydric phenol compounds, such as phenol and cresol; dihydric phenol compounds, such as resorcinol; phenoxyether compounds, such as phenoxyethanol; phenol ester compounds, such as pentachlorophenyl laurate; phenyl compounds, such as triphenyltin oxide; biphenyl compounds, such as diphenyl; monohydric naphthols, such as -naphthol; naphthalene compounds, such as monochloronaphthalene; and isoquinoline compounds, such as dodecylisoquinolium bromide.

In addition, examples of organic aromatic compound antibacterial materials include nitrile compounds, isothiazole compounds, thiadiazole compounds, halogenophenol compounds, pyrrole compounds, quinone compounds, quinoline compounds, and organic phosphate compounds.

### (12) Water-permeable bagshaped casing for water absorber

In this embodiment, with respect to the type and form of the water-permeable bag-shaped casing used in the water absorber, there is no particular limitation as long as the bag-shaped casing is water-permeable, and, as a material therefor, for example, cloth made of a natural fiber or a synthetic fiber can be used.

Examples of natural fibers include cotton, jute, and silk. Examples of synthetic fibers include polyamide, polyimide, polyester, polyethylene, and polypropylene.

Cloth obtained by knitting the above fibers individually or in combination is preferred. Alternatively, non-woven may be used. Further, a film having pores formed in the surfaces and interior portions may be used.

By employing the above-mentioned construction, a water absorber having an antibacterial water-absorbing agent and further a non-antibacterial water-absorbing agent, which is small in weight and volume in a dry state and easy to use, is realized.

In addition, when such a water absorber absorbs water, it increases in weight and volume, and it has optimum external shape conformation property. Therefore, the water absorber of the present invention also functions as a sandbag.

Further, the water absorber is produced utilizing, as resources, scrap polymers or scrap inorganic solid materials which are waste difficult to be disposed of, thus making it possible to contribute to the preservation of the environment.

### (13) Solid material placed in water absorber used as sandbag

In this embodiment, in a preferred water absorber, in addition to the water-absorbing agent, a solid material having a particle diameter of 0.01 to 100 mm and having a specific gravity of 1 or more may be placed in the water-permeable bag-shaped casing.

The solid material content is preferably 1 to 99% by weight, based on the dry weight of the water-absorbing agent.

In the water absorber of this embodiment, examples of solid materials which can be mixed into the water-absorbing agent include minerals taken out or mined from natural world including conglomerate, small stone and sand, waste, and materials obtained by binding waste together. Further, the solid material may be waste, having magnetic properties.

As a material for the solid material, there can be mentioned a metal, ceramic, glass, and materials obtained by binding these together. As a binder, a binder comprised of a polymer material, for example, an epoxy resin adhesive can be used.

Further, in the water absorber of this embodiment, as the solid material, one having magnetic properties can be used. Examples of materials having magnetic properties include ones having ferrimagnetic properties, ones having ferromagnetic properties, and ones having parasitic magnetic properties.

When a solid material having magnetic properties is used, the water absorber can be drawn using a magnetic force, and therefore it can be easily handled by means of a crane or the like in the transformation. In addition, the water absorber can be identified by the magnetic properties.

Examples of ferromagnetic materials used as a solid material having magnetic properties include iron, nickel, cobalt, alloys of these metals and alloys containing these metals, transition metals and alloys thereof, and alloys containing rare earth elements.

Further, examples of ferrimagnetic materials include magnetite, maghemite, manganese-zinc ferrite, manganese-nickel ferrite, barium ferrite, and strontium ferrite.

These magnetic materials have a large specific gravity, as compared to general inorganic materials. Therefore, they can increase the weight of the water absorber used as sandbags.

Further, these magnetic materials are scrap materials resulting from disassembling of electronic appliances and which are difficult to be disposed of, and, from the viewpoint of achieving effective utilization of scrap materials, the use of the magnetic materials is advantageous.

Hereinafter, more specific embodiments will be described in detail.

### (A) Embodiment 1 of water absorber

This is an example of a water absorber according to a preferred embodiment of the present invention, and Fig. 1A is a diagrammatic cross-sectional view of a water absorber in this embodiment, showing the construction of the water absorber, and Fig. 1B is a diagrammatic cross-sectional view of the water absorber in this embodiment, which has absorbed water to swell.

In this embodiment, a water absorber 10 is a water absorber for absorbing and removing water remaining on floors resulting from leakage of water or flooding, and, as shown in Fig. 1A, comprises a water-permeable bag-shaped casing 12 made of cotton cloth filled with an antibacterial water-absorbing agent 14 comprised of the above modified polymer compound.

The water absorber 10 absorbs water to swell as shown in Fig. 1B. The water absorber 10 is filled with the antibacterial water-absorbing agent 14, and therefore, even after absorbing water, the water absorber is not under unsanitary conditions such that bacteria proliferate. Thus, when the water absorber 10 is dried, it regains a water-absorbing property and can be used as a water absorber.

Further, even when a non-antibacterial water-absorbing agent is mixed into the water absorber that is filled with 5 parts by weight or more of the antibacterial water-absorbing agent, the water absorber exhibits an antibacterial property.

### (B) Embodiment 2 of water absorber

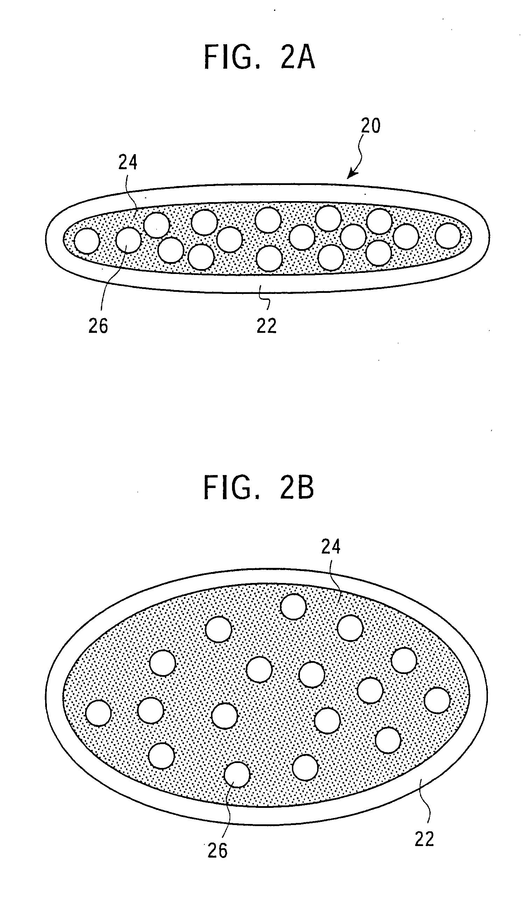

Another preferred embodiment of the present invention is one example in which a water absorber is applied to a sandbag, and Fig. 2A is a diagrammatic cross-sectional view of a water absorber in this embodiment, showing the construction of the water absorber, and Fig. 2B is a diagrammatic cross-sectional view of the water absorber in this embodiment, which has absorbed water to swell.

In this embodiment, a water absorber 20 is a water absorber used as a sandbag, and, as shown in Fig. 2A, comprises a water-permeable bag-shaped casing 22 made of jute cloth filled with an antibacterial water-absorbing agent 24 comprised of the above modified polymer compound and a solid material 26 having a specific gravity of 1 or more. The solid material 26 is a manganese-nickel ferrite particulate solid material having a particle diameter of 2 to 10 mm.

In this embodiment, the water absorber 20 is, as shown in Fig. 2A, lightweight and is not bulky, and hence it is advantageous in transportation, and in addition, as shown in Fig. 2B, the antibacterial water-absorbing agent 24 absorbs water to swell during the use, and increases in weight and volume, thus functioning as a sandbag.

Further, the water absorber 20 is filled with the antibacterial water-absorbing agent 24, and therefore, even after absorbing water, the water absorber is not under unsanitary conditions such that bacteria proliferate. Thus, when the water absorber 20 is dried, it regains a water-absorbing property and can be used as a water absorber.

Further, the water absorber 20 is drawn by the magnetic power of the manganese-nickel ferrite solid material 26, and therefore it can be easily handled by means of a crane or the like in the transformation. In addition, the water absorber can be identified by the magnetic properties.

### (C) Experimental Examples

Hereinafter, for evaluating the water absorbers according to Embodiments 1 and 2, as samples for Experimental Examples and Comparative Examples, water absorbers were actually prepared and compared with one another to conduct examinations for evaluation. The following Experimental Examples should not be construed as limiting the scope of the present invention.

### (C-1) Experimental Example 1

In a first Experimental Example, as a water-absorbing agent for water absorber, first, as described below, an antibacterial water-absorbing agent and a non-antibacterial water-absorbing agent were individually produced. On the other hand, as a water-permeable bag-shaped casing to be filled with the water-absorbing agent, a bag was prepared from thick cotton cloth.

Then, 95 parts by weight of the non-antibacterial water-absorbing agent and 5 parts by weight of the antibacterial water-absorbing agent were placed in the bag to produce a water absorber as a sample in Experimental Example 1. On the other hand, 100 parts by weight of the non-antibacterial water-absorbing agent was placed in the bag to produce a water absorber as a sample in Comparative Example 1.

Subsequently, the water absorber as a sample in Experimental Example 1 and the water absorber as a sample in Comparative Example 1 were dipped in standing water on the rooftop of a building. Both the water absorbers absorbed water in an amount corresponding to 15,000 parts by weight or more of the water-absorbing agent in each water absorber to swell. These water absorbers were allowed to stand in fine weather and dried at substantially the same level to reduce their volumes.

Then, they were made stand on the rooftop of the building, so that they repeatedly suffered a phenomenon such that they absorbed rainwater to swell and a phenomenon such that they decreased in volume by natural drying.

As a result, in the water absorber as the sample in Comparative Example 1, green lower plants were generated and adhered to the whole surface and putrid odor was confirmed, whereas in the water absorber as the sample in Experimental Example 1, such a phenomenon was not recognized.

### (C-1-1) Antibacterial water-absorbing agent in Experimental Example 1

In Experimental Example 1, as a raw material of the antibacterial water-absorbing agent, a scrap SAN resin recovered from the transparent portion of a card panel of an 8 mm cassette tape was used, and ground by means of a shredder and classified into 16 to 32 mesh.

The scrap SAN resin had a composition such that the styrene content was 60 % by mole and the acrylonitrile content was 40% by mole.

Then, 1 part by weight of the scrap SAN resin was added to 30 parts by weight of concentrated sulfuric acid having a concentration of 96% by weight, and kept at a temperature of 80°C. for 20 minutes to effect a reaction for acid treatment. After completion of the reaction, the reaction system was subjected to filtration by means of a glass filter to separate the solid material from the reaction system, followed by washing with water.

Then, the solid material was neutralized by 50 parts by weight of a 1 M aqueous solution of sodium hydroxide, and washed with water in a satisfactory amount.

The filter cake obtained in the filtration was dispersed in 1,000 parts by weight of pure water, and 10 parts by weight of a 1.0 M aqueous solution of copper sulfate pentahydrate was added thereto and well stirred, and filtered, followed by washing with water, thus obtaining a solid material. The obtained solid material was dried in an air circulation dryer at a temperature of 100°C for 3 hours.

By the above treatment, a brown solid material was obtained as an antibacterial water-absorbing agent. The content of the sulfonic acid group in the solid material was 36% by mole, based on the mole of the all monomer units. In addition, the molar ratio of the copper contained in the solid material to the sulfonic acid group was 0.91.

### (C-1-2) Non-antibacterial water-absorbing agent in Experimental Example 1

In Experimental Example 1, as a raw material of the non-antibacterial water-absorbing agent, a scrap ABS resin recovered from the black portion of a card panel of an 8 mm cassette tape was used, and first, it was ground by means of a freezing shredder and classified into 16 to 32 mesh.

The scrap ABS resin had a composition such that the styrene content was 52% by mole, the acrylonitrile content was 28% by mole, the butadiene content was 20 % by mole, and the carbon black content was 2% by weight.

Then, 1 part by weight of the scrap ABS resin was added to 30 parts by weight concentrated sulfuric acid having a concentration of 96% by weight, and kept at a temperature of 80°C for 20 minutes to effect a reaction for acid treatment. After completion of the reaction, the reaction system was subjected to filtration by means of a glass filter to separate the solid material from the reaction system, followed by washing with water.

Then, the solid material was neutralized by 50 parts by weight of a 1 M aqueous solution of sodium hydroxide, and washed with water in a satisfactory amount. Then, at a point in time when the pH of the filtrate reached 8 or less, the solid material was separated by filtration. The obtained solid material was dried in an air circulation dryer at a temperature of 105°C for 2 hours.

By the above treatment, a black solid material was obtained as a non-antibacterial water-absorbing agent. From the result of the elemental analysis for sulfur, it was confirmed that the content of the sulfonic acid group in the water-absorbing agent was 33% by mole, based on the mole of the all monomer units. In addition, the sodium contained was almost equimolar (1.1) to the sulfonic acid group.

### (C-2) Experimental Example 2

In this Experimental Example, as a water-absorbing agent for water absorber, first, as described below, an antibacterial water-absorbing agent was produced. On the other hand, as a water-permeable bag-shaped casing to be filled with the water-absorbing agent, a bag was prepared from thick cotton cloth.

Next, as a water-absorbing agent for water absorber, 100 parts by weight of the antibacterial water-absorbing agent was placed in the bag to produce a water absorber as a sample in Experimental Example 2. On the other hand, as a sample in Comparative Example 2, the water absorber as the sample in Comparative Example 1 in Experimental Example 1 was used.

Subsequently, the water absorber as a sample in Experimental Example 2 and the water absorber as a sample in Comparative Example 2 were dipped in standing water on the rooftop of a building. Both the water absorbers absorbed water in an amount corresponding to 15,000 parts by weight or more of the water-absorbing agent in each water absorber to swell. These water absorbers were allowed to stand in fine weather and dried at substantially the same level to reduce their volumes.

Then, they were left on a rooftop of the building, so that they repeatedly suffered a phenomenon such that they absorbed rainwater to swell and a phenomenon such that they decreased in volume by natural drying.

As a result, in the water absorber as the sample in Comparative Example 2, green lower plants were generated and adhered to the whole surface and putrid odor was confirmed, whereas in the water absorber as the sample in Experimental Example 2, such a phenomenon was not recognized.

### (C-2-1) Antibacterial water-absorbing agent in Experimental Example 2

To 70 parts by weight of cyclohexane was added 3 parts by weight of the scrap ABS resin which was used in Experimental Example 1 as a raw material, and 4.2 parts by weight of sulfuric anhydride was added dropwise to the resultant mixture while maintaining the temperature at 30°C.

Then, the mixture was maintained at 30±2°C. for 2 hours to effect a reaction for acid treatment, and the reaction system was subjected to filtration to separate the solid material, followed by washing with water.

Subsequently, 2,000 parts by weight of the resultant solid material was dispersed in pure water, and to the resultant dispersion were added 50 parts by weight of a 1.0 M aqueous solution of zinc sulfate heptahydrate and 30 parts by weight of 1.0 M aqueous solution of copper sulfate pentahydrate, and well stirred, and then, filtered to separate the solid material, followed by washing with water.

The obtained solid material was dried in a dryer for 2 hours.

The solid material obtained by the above treatment was taken as an antibacterial water-absorbing agent in Experimental Example 2. The content of the sulfonic acid group in the antibacterial water-absorbing agent in Experimental Example 2 was 25 % by mole, based on the mole of the all monomer units. The molar ratio of the zinc contained in the solid material to the sulfonic acid group was 0.42, and the molar ratio of the copper contained in the solid material to the sulfonic acid group was 0.36.

As mentioned above, in this embodiment, by virtue of having an acid group introduced as a substituent in the form of a metal salt, a water absorber having both optimum antibacterial property and optimum water-absorbing property, obtained from a raw material including an organic polymer material having acrylonitrile and at least one unit selected from the group consisting of styrene and a conjugated diene, namely, extremely general organic raw material, is realized.

Thus, by employing the above embodiment, a water absorber is realized that for use against leakage of water and flooding, or a water absorber, which is lightweight and is not bulky for transportation and absorbing water so as to increase in weight and volume and which can be used as a sandbag.

Further, the water absorber according to the above embodiment is filled with an antibacterial water-absorbing agent and therefore, even after absorbing water, the water absorber is not under unsanitary conditions such that bacteria proliferate. Thus, it is sanitarily safe, and, when dried, regains its water-absorbing property and can be re-used as a water absorber.

Furthermore, the water absorber according to the above mentioned preferred exemplary embodiment can be produced from used organic polymer materials as a raw material, and hence it has an advantage in that the resources from the Earth can be effectively utilized.

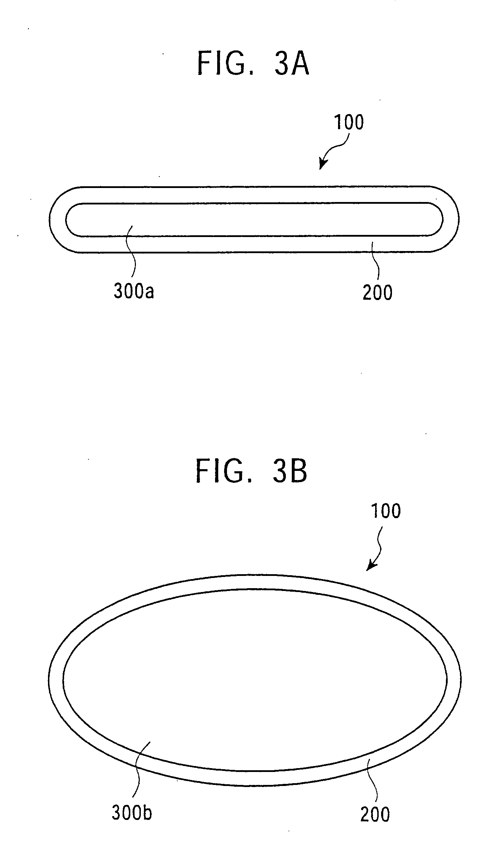

Embodiments 3 and 4 of the present invention will be described in detail with reference to Figs. 3A to 4B. In the following, explanation is made on another water absorber for removing unnecessary water or a water absorber having a function of a sandbag according to another preferred embodiment of the present invention.

### Embodiment 3

Figs. 3A and 3B are diagrammatic cross-sectional views of the water absorber, showing the structure of the water absorber, Fig. 3A showing a state of the water absorber before use (before absorbing water, namely, immediately after delivery), and Fig. 3B shows the state of the water absorber in use (after absorbing water). In Figs. 3A and 3B, reference numeral 100 designates the water absorber, reference numeral 200 designates a water-permeable bag-shaped casing, reference numeral 300 designates a water-absorbing material, reference numeral 300a designates a water-absorbing material before absorbing water, and reference numeral 300b designates the water-absorbing material after absorbing water.

The water absorber 100 in Fig. 3A includes the bag-shaped casing 200 and the water-absorbing material 300a. Specifically, the water absorber 100 comprises the water-permeable bag-shaped casing 200 which contains a surfactant as desired, and the water-absorbing material 300a enclosed in the bag-shaped casing 200, the water-absorbing material 300a including a water-absorbing polymer (modified polymer) obtained by subjecting to acid treatment a polymer material comprising acrylonitrile and at least one unit selected from the group consisting of styrene and a conjugated diene, or the water absorber 100 comprising the bag-shaped casing 200 and the water-absorbing material 300a comprising modified polymer (water-absorbing polymer) and a surfactant.

### Embodiment 4

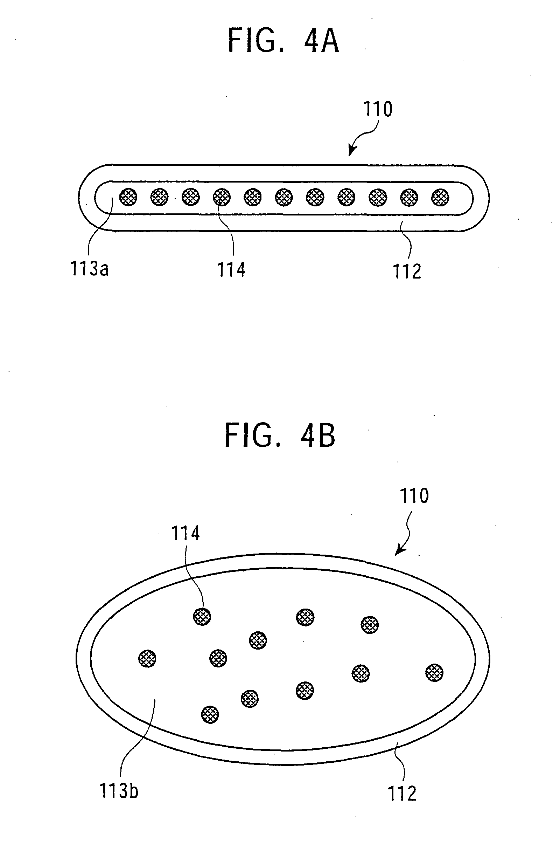

Figs. 4A and 4B are diagrammatic cross-sectional views of a water absorber 110, showing the structure of the water absorber, and Fig. 4A shows the state of the water absorber before use (before absorbing water, namely, immediately after delivery), and Fig. 4B shows the state of the water absorber in use (after absorbing water). In Figs. 4A and 4B, reference numeral 114 designates a solid material having a specific gravity of 1 or more. Thus, in this embodiment, a water absorber 110 comprises a water-absorbing material 113a and a solid material 114 which are enclosed in a bag-shaped casing 112. Other construction is the same as that in Embodiment 3.

The polymer material (water-absorbing polymer, i.e., starting material of the water-absorbing resin) constituting the water absorbers 100 and 110 comprises acrylonitrile and at least one unit selected from the group consisting of styrene and a conjugated diene. In this polymer material, it is preferred that the contents of acrylonitrile, styrene and a conjugated diene (e.g., butadiene or isoprene) respectively fall within the ranges below.

Specifically, the polymer material preferably contains an acrylonitrile unit in an amount of 5 to 80% by mole, more preferably 10 to 60% by mole, especially preferably 20 to 50% by mole. When the acrylonitrile unit content is less than 5% by mole, the polymer material after the acid treatment is water-soluble, so that it cannot be used as a water-absorbing resin. On the other hand, when the acrylonitrile unit content exceeds 80% by mole, the resultant polymer material is too rigid and it is difficult to grind into small pieces, and the content of the styrene and/or conjugated diene in the polymer material becomes too small, so that the introduction rate of a hydrophilic group is lowered, thus lowering the water-absorbing effect (especially against an aqueous electrolyte solution).

In addition, the polymer material preferably contains at least one unit selected from the group consisting of styrene and a conjugated diene in an amount of 20 to 95 % by mole, more preferably 40 to 85 % by mole, especially preferably 50 to 80 % by mole.

In this embodiment, an ionic acid group is introduced into the polymer material by acid treatment. Therefore, the styrene and/or conjugated diene constituent unit is necessary for improving the water-absorbing property (especially to an aqueous electrolyte solution) of the water-absorbing resin formed. Further, other constituent units may be contained in the polymer material as long as acrylonitrile and at least one unit selected from the group consisting of styrene and a conjugated diene are contained in the predetermined amounts.

Examples of the above other constituent units include maleic anhydride, itaconic anhydride, .-methylstyrene, acrylamide, methacrylamide, acrylic acid, acrylates (saturated and unsaturated hydrocarbons having 1 to 10 carbon atoms), methacrylic acid, methacrylates (saturated and unsaturated hydrocarbons having 1 to 10 carbon atoms), vinyl acetate, ethylene, propylene, butylene, vinylpyrrolidone, and vinylpyridine.

As the polymer material, one having a weight average molecular weight (Mw) of 1000 to 20,000,000 can be used, but the weight average molecular weigh is generally 10,000 to 1,000,000. When the molecular weight is less than 1,000, the polymer material is water-soluble in the acid treatment, so that a desired water-absorbing resin cannot be obtained. On the other hand, the molecular weight is higher than 20,000,000, the reaction rate in the acid treatment becomes small and this is disadvantageous from a practical point of view.

As the above polymer material comprising acrylonitrile and at least one unit selected from the group consisting of styrene and a conjugated diene, an ABS resin, a SAN resin, an ASA resin, an ACS resin, and an NBR rubber resin are preferred. These materials may be fresh virgin pellets, residuals (fragments) discharged in the fabrication process for resin raw materials and molded articles, or used scrap materials from materials which are molded for specific uses, such as housings, parts, tubes and hoses, as well as buffers for electric appliances and automobiles. Sources of scrap materials may be any from factories, stores, and houses, but waste recovered from factories and stores are more desired than general waste from houses because the former generally have a relatively uniform composition.

Further, the above polymer material may be an alloy of other resins, or scrap materials containing an additive, such as a coloring pigment, a stabilizer, a flame retardant, a plasticizer, filler, or other auxiliary. In addition, the polymer material may be a mixture from scrap material and a virgin material.

As the resin that can be mixed into the above polymer material, a resin that does not inhibit the above-mentioned acid treatment in the present invention is desired, and examples include polyphenylene ether, polycarbonate, polyphenylene sulfide, polyethylene terephthalate, polybutylene terephthalate, and polyamide. It is desired that the above resin is mixed in an amount of 60 % by weight or less, based on the weight of the polymer material. When the above resin content is too large, the reaction in the acid treatment is inhibited.

It is desired that the polymer material be divided into small pieces before subjected to acid treatment. As examples of methods of grinding the polymer material into small pieces, there can be mentioned the followings.
(1) Grinding is conducted using a grinder, followed by sieving. When the polymer material contains a rubber component, it is preferred that grinding is conducted by this method after freezing treatment.
(2) Heat-melting is conducted, followed by pelletization into fine bead forms.

It is desired that the size of the polymer material in form of small pieces is smaller than 3.5 mesh. When the size is larger than the above value, the surface area of the polymer material becomes small and the acid treatment is not facilitated, so that the reaction time is prolonged and this is disadvantageous from a practical point of view. Further, the function (water-absorbing function) of the polymer material as a water-absorbing resin becomes markedly poor.

In this embodiment, when the polymer material contains the below inorganic pigment (carbon black or titanium oxide), the periphery of the inorganic pigment is easily acid treated and the acid treatment is fostered. That is, the inorganic pigment is removed from the polymer material during the reaction in the acid treatment, so that an acid readily permeates the surface of the polymer material, thus improving the water-absorbing effect of the water-absorbing agent. Each of carbon black and titanium oxide may be either contained in the polymer material originally or added or mixed into the polymer material, but the former is desired because the water-absorbing property of the resultant water-absorbing resin is improved. Carbon black or titanium oxide may be one that is generally used as a coloring agent, reinforcement, and an electric conductivity-imparting agent for plastics.

The carbon black may be one that is produced by any of a channel process, a furnace process, and a thermal process, and may be used individually or in combination. The carbon black generally has an average particle diameter of 0.005 to 100 µm, preferably 0.01 to 10µm. The titanium oxide may be any of rutile titanium oxide, anatase titanium oxide, and ultrafine titanium, and may be used individually or in combination. The titanium oxide generally has an average particle diameter of 0.01 to 50 µm, preferably 0.05 to 10 µm.

The content of the carbon black or titanium oxide in the water-absorbing resin is generally 0.01 to 20 % by weight, preferably 0.05 to 10 % by weight, based on the dry weight of the water-absorbing resin.

In the method for producing the water absorber in this embodiment, a polymer material including constitution units of acrylonitrile and at least one unit selected from the group consisting of styrene and a conjugated diene is subjected to acid treatment to be converted to a water-absorbing resin. That is, by the acid treatment, part of the acrylonitrile in the polymer material is hydrolyzed, and an ionic group is introduced into the styrene or conjugated diene.

As an acid used in the acid treatment, an inorganic acid is preferred. The amount (weight) of the inorganic acid charged is in the range from 1 to 500 times, preferably 10 to 200 times the weight of the polymer material. When the amount of the inorganic acid added is smaller than the weight of the polymer material, the introduction rate of an ionic group into the styrene or conjugated diene and the hydrolysis rate of the acrylonitrile group are lowered, so that the properties (water-absorbing effect) of the polymer material as a water-absorbing resin become poor. On the other hand, when the amount of the inorganic acid charged is larger than 500 times the weight of the polymer material, there is a need to neutralize the excess inorganic acid, and this is disadvantageous from the viewpoint of economy and productivity.

Examples of inorganic acids used in the acid treatment include sulfonating agents, such as concentrated sulfuric acid, sulfuric anhydride, fuming sulfuric acid, and chlorosulfonic acid; nitric acid; fuming nitric acid; phosphoric acid; phosphorus chloride; and phosphorus oxide. Among these, concentrated sulfuric acid, sulfuric anhydride, fuming sulfuric acid, and chlorosulfonic acid are preferred, and especially preferred is concentrated sulfuric acid having a concentration of 70% by weight or more. These inorganic acids may be used individually or in combination. When two or more inorganic acids are used in combination, they may be either mixed together or successively added. For example, the polymer material is first treated with concentrated sulfuric acid, and then sulfuric anhydride is added thereto. Thus, a water-absorbing resin having optimum form stability can be obtained in an aqueous system. This is because, first, the nitrile portion of the polymer material mainly undergoes hydrolysis in the treatment with concentrated sulfuric acid, and then, the styrene and/or conjugated diene portion is forcibly sulfonic-crosslinked in the treatment with sulfuric anhydride to obtain a water-absorbing resin having a high degree of crosslinking.

The acid treatment may be conducted either in an inorganic acid or in a reaction system using an organic solvent. Examples of usable organic solvents include C₁-C₂ aliphatic halogenated hydrocarbons (preferably 1,2-dichloroethane, chloroform, dichloromethane, and 1,1-dichloroethane), alicyclic hydrocarbons (preferably cyclohexane, methylcyclohexane, and cyclopentane), nitromethane, nitrobenzene, sulfur dioxide, paraffin hydrocarbons (having 1 to 7 carbon atoms), acetonitrile, carbon disulfide, tetrahydrofuran, tetrahydropyran, 1,2-dimethoxyethane, acetone, methyl ethyl ketone, and thiophene. Of the above organic solvents, C₁-C₂ aliphatic halogenated hydrocarbons, alicyclic hydrocarbons, nitromethane, nitrobenzene, and sulfur dioxide are preferred. These solvents may be used individually or in combination. With respect to the mixing ratio of the above organic solvents, there is no particular limitation.

It is preferred that the weight of the organic solvent is less than 200 times the weight of the polymer material. When the amount of the organic solvent added is larger than the above amount, the reaction rate in the acid treatment is lowered and the cost for the organic solvent increases, and this is disadvantageous from an economical point of view. In the acid treatment, if desired, a Lewis base may be used. Examples of Lewis bases include alkyl phosphates (such as triethyl phosphate and trimethyl phosphate), dioxane, acetic anhydride, ethyl acetate, ethyl palmitate, diethyl ether, and thioxane. The inorganic acid and organic solvent used in the above acid treatment may be recovered after the reaction, and used in another reaction as they are or after purified by a stripping or distillation method.

In this embodiment, the above polymer material is subjected to the above-mentioned acid treatment to introduce an ionic group into the styrene and/or conjugated diene unit and to hydrolyze the acrylonitrile unit so as to undergo amidation, so that the polymer material is converted to a water-absorbing resin.

Examples of ionic groups introduced into the styrene or conjugated diene unit by the acid treatment include a sulfonic acid group and salts thereof, -PO(OH)₂ and salts thereof, -CH₂PO(OH)₂ and salts thereof, and -NO₂. For introducing a sulfonic acid group as an ionic group, the polymer material and a sulfonating agent, such as concentrated sulfuric acid, sulfuric anhydride, fuming sulfuric acid, or chlorosulfonic acid, may be reacted with each other directly or in a solvent. On the other hand, for introducing a -PO(OH)₂ group, diphosphorus trioxide is added to a solvent and hydrolyzed. Further, the polymer material is reacted with a mixture of sulfuric acid and nitric acid to introduce a -NO₂ group into the polymer material. As the ionic group, a sulfonic acid group and/or a salt thereof is preferred. These ionic groups may be introduced into the polymer material individually or in combination.

For obtaining satisfactory performance as a water-absorbing resin, the content of the ionic group in the polymer material is 5 to 95% by mole, preferably 10 to 70% by mole, based on the mole of the all monomer units. When the introduction rate of the ionic group is higher than 95% by mole, the product of the acid treatment from the polymer material becomes water-soluble, and it cannot be used as a water-absorbing resin. On the other hand, when the introduction rate of the ionic group is less than 5% by mole, the water-absorbing effect (especially to an aqueous electrolyte solution) becomes poor.

When the acid treatment is conducted under the below conditions, an ionic group in the above-mentioned predetermined amount can be introduced into the polymer material. The reaction temperature of the acid treatment varies depending on whether or not an organic solvent is used, but is generally 0 to 200°C, preferably 30 to 120°C. When the reaction temperature is too low, the reaction rate becomes small and this is disadvantageous from a practical point of view, and further, a water-absorbing resin having optimum performance cannot be obtained. On the other hand, when the reaction temperature is too high, the molecular chain of the polymer material is likely to be broken (by thermal decomposition), so that the polymer material is dissolved in water. The reaction time largely varies depending on the reaction temperature, but is generally 1 minute to 40 hours, preferably 5 minutes to 2 hours. When the reaction time is too short, the reaction does not satisfactorily proceed. On the other hand, when the reaction time is too long, the production efficiency is poor.

When the reaction product obtained in the acid treatment is washed, and the reaction product is added to a large amount of water or a basic aqueous solution or the reaction product is filtered by means of a filter or the like, and the solid material filtered is placed in a large amount of water or a basic aqueous solution. In these washing treatments, the nitrile group in the polymer material is converted to an amide group or a carboxyl group and/or a salt thereof. Examples of basic substances used in the above basic aqueous solution include compounds, such as oxides, hydroxides, carbonates, acetates, sulfates, and phosphates of alkali metals (e.g., sodium, lithium, and potassium) and alkaline earth metals (e.g., magnesium and calcium). For improving the water-absorbing effect (especially to an aqueous electrolyte solution) of the water-absorbing resin and the deodorizing effect for ammonia gas, etc., it is desired that washing with water be solely performed without neutralizing. The thus obtained reaction product is in a gel form, and is then dried by drying under the sun, heating drying, vacuum drying, centrifugal dehydration, or press dehydration to obtain a desired water-absorbing resin.

By the above-mentioned treatment method, a water-absorbing resin having a nitrile group and a group formed by the hydrolysis of the nitrile group as well as an ionic group can be obtained. By virtue of having an non-reacted nitrile group, this water-absorbing resin is improved in insolubility in water and gel strength, and, by virtue of having a group formed by the hydrolysis of the nitrile group and an ionic group, the water-absorbing resin is improved in terms of water-absorbing property (especially to an aqueous electrolyte solution).

In the preferred embodiment described above, as the surfactant, an anionic surfactant, a cationic surfactant, a nonionic surfactant, or an ampholytic surfactant can be appropriated used. Examples of anionic surfactants include fatty acid esters, higher alcohol sulfates, liquid fatty oil sulfate salts, sulfate salts of aliphatic amine and aliphatic amide, aliphatic alcohol phosphate salts, sulfonic acid esters of dibasic fatty acid esters, fatty acid amid sulfonic acid esters, and naphthalene sulfonic acid esters of formalin condensation.

Examples of cationic surfactants include aliphatic amine salts, quaternary ammonium salts, and alkylpyridinium salts. Examples of nonionic surfactants include polyoxyethylene alkyl ethers, polyoxyethylene alkylphenol ethers, polyoxyethylene alkyl esters, sorbitan alkyl esters, and polyoxyethylene sorbitan alkyl esters.

Among the above surfactants, anionic surfactants and/or nonionic surfactants are preferably used. Thus, the ionic group formed in the water-absorbing resin, especially acid group is prevented from forming a salt with the organic cation in a surfactant, that is, the ionic group is prevented from being hydrophobic, so that lowering of the water-absorbing property of the water-absorbing resin can be prevented.

In this embodiment, as a material for the water-permeable bag-shaped casing 2, cloth made of a natural fiber or a synthetic fiber can be used. Examples of natural fibers include cotton, jute, and silk. Examples of synthetic fibers include polyamide, polyimide, polyester, polyethylene, and polypropylene. Cloth obtained by knitting the above fibers individually or in combination is preferred. However, non-woven or a film having pores formed in the surfaces and interior portions may also be used.

In this embodiment, examples of solid materials having a specific gravity of 1 or more include natural minerals, waste, and materials obtained by binding waste together. As a material for the solid material, there can be mentioned a metal, ceramic, glass, and materials obtained by binding these together. As a binder, a polymer material having a specific gravity of 1 or less can be used.

In this embodiment, as the solid material having a specific gravity of 1 or more, one having magnetic properties can be used. Examples of solid materials magnetic properties include ones having ferrimagnetic properties, ones having ferromagnetic properties, ad ones having parasitic magnetic properties. By utilizing the magnetic properties, it is possible to magnetically draw, and carry and transport the sandbag by means of a crane or the like. In addition, the sandbag can be identified by the magnetic properties. Examples of ferromagnetic materials include iron, nickel, cobalt, alloys of these metals and alloys containing these metals, transition metals and alloys thereof, and alloys containing rare earth elements. Further, examples of ferrimagnetic materials magnetite, maghemite, hematite, manganese-zinc ferrite, manganese-nickel ferrite, barium ferrite, and strontium ferrite. These magnetic materials have a large specific gravity, as compared to general inorganic materials, and therefore there is an effect such that they can largely increase not only the weight of the sandbag but also the weight of the whole sandbag that has absorbed water. Further, these magnetic materials are scrap materials that result from disassembling of electronic appliances and which are difficult to be disposed of, and, from the viewpoint of achieving effective utilization of scrap materials, the use of the magnetic materials is advantageous.

Examples of the water absorber according to this embodiment and Comparative Example will be described. The following Examples should not be construed as limiting the scope of the present invention.

### Example 1

A bag made of thick cotton cloth impregnated with sodium laurylsulfate as a surfactant were prepared. On the other hand, 100 parts by weight of the water-absorbing material produced as described below impregnated with 1 part by weight of sodium laurylsulfate was prepared and enclosed in the above bag to produce a water absorber.

### (Fabrication of water-absorbing material)

1 Part by weight of a powdery scrap ABS resin was added to 30 parts by weight of concentrated sulfuric acid (96 % by weight) to effect a reaction at 80°C. for 20 minutes. This powdery scrap material is obtained by grinding the black portion of a card panel of an 8 mm cassette tape (which contains a resin component comprising 52 % by mole of styrene, 28 % by mole of acrylonitrile, and 20 % by mole of butadiene, and 2 % by weight of carbon black) by means of a freezing shredder and classifying the ground material into 16 to 32 mesh.

After completion of the above reaction, the solid material in the reaction system was taken out by filtration using a glass filter and washed with water, and then, neutralized by 50 parts by weight of a 1 M aqueous solution of sodium hydroxide. The solid material was further washed with water in a satisfactory amount, and, at a point in time when the pH of the filtrate reached 8 or lower, the solid material was removed and dried in an air circulation dryer at 105°C. for 2 hours to obtain a black solid material. From the result of the elemental analysis for sulfur, it was confirmed that the content of the sulfonic acid group in the solid material was 33% by mole, based on the mole of the all monomer units. In addition, the sodium contained was almost equimolar (1.1) to the sulfonic acid group.

### Example 2

A water absorber was produced in substantially the same manner as in Example 1 except that polyoxyethylene ether of myristyl alcohol was used instead of sodium laurylsulfate.

### Comparative Example

A water absorber was prepared in substantially the same manner as in Example 1 except that neither sodium laurylsulfate nor polyoxyethylene ether of myristyl alcohol was used as a surfactant.

The water absorbers in the same form obtained in Examples 1 and 2 and Comparative Example were immersed in water having a depth of 1 cm and a uniform surface, and the water-absorbing and swelling rates were individually estimated from the changes in the thickness of the water absorbers. Before immersion, all the water absorbers had substantially the same thickness, but, after 1 minute, the thickness of the water absorber of Example 1 was 2.6 cm and that of Example 2 was 2.8 cm, whereas that of Comparative Example was 1.6 cm. From this result, it is apparent that the water-absorbing rate is increased by the use of a surfactant.

As mentioned above, each of the water absorbers according to Embodiments 3 and 4 is a water absorber including a water-absorbing polymer (water-absorbing resin) in form of small pieces including a powder form and a particulate form enclosed in a water-permeable bag-shaped casing, the water-absorbing resin being a modified polymer obtained by subjecting to acid treatment a polymer material including acrylonitrile and at least one unit selected from the group consisting of styrene and a conjugated diene, the modified polymer absorbing water to be gelled, and at least one component selected from the group consisting of the water-permeable bag-shaped casing and the water-absorbing polymer containing a surfactant. Therefore, the water absorber is advantageous not only in that it can be effectively used for removing unnecessary residual water resulting from leakage or flooding, but also in that it has an optimum function especially as a sandbag. In addition, by incorporating a surfactant into the water-absorbing polymer, a lowering of the water-absorbing property of the water-absorbing polymer is prevented. Further, by incorporating a surfactant into the water-permeable bag-shaped casing, the water-absorbing property of the bag-shaped casing is enhanced, thus particularly improving the function of sandbag.

In addition, each of the water absorbers of Embodiments 3 and 4 is small in weight and volume when it does not absorb water. Therefore, carrying, and loading and unloading operations for the water absorbers are easy, and, when a disaster occurs, it is possible to rapidly assign the water absorbers to a site requiring them at that time. Further, this water absorber can be repeatedly used by means of drying the water absorber that has absorbed water. Furthermore, the water absorber can be produced utilizing scrap polymers or scrap inorganic solid materials which have conventionally been difficult to be disposed of, thus making it possible to effectively utilize resources and contribute to the preservation of the environment.

Further, in each of the water absorbers of Embodiments 3 and 4, the water absorber has a structure such that it includes, in addition to the above water-absorbing polymer, a solid material in form of small pieces including a powder form and a particulate form having a specific gravity of 1 or more enclosed in the water-permeable bag-shaped casing. Thus, the weight of the water absorber is increased to improve the function as a sandbag.

Furthermore, the method for producing the water absorbers of Embodiments 3 and 4 is a method for producing a water absorber which includes a water-permeable bag-shaped casing and a water-absorbing polymer in form of small pieces including a powder form and a particulate form enclosed in the water-permeable bag-shaped casing, the method including: subjecting to acid treatment a polymer material in form of small pieces having acrylonitrile and at least one unit selected from the group consisting of styrene and a conjugated diene to obtain a water-absorbing polymer which is a modified polymer capable of absorbing water to be gelled; and enclosing the resultant water-absorbing polymer in form of small pieces in a water-permeable bag-shaped casing, a surfactant being incorporated into at least one component selected from the group consisting of the water-absorbing polymer and the water-permeable bag-shaped casing, before the enclosing step. Therefore, the water absorber having the above-mentioned advantage can be produced by a simple process and provided at low cost.

In addition, in the method for producing the water absorbers of Embodiments 3 and 4, when the polymer material contains carbon black or titanium oxide, the acid treatment for the polymer material is fostered. Therefore, a water-absorbing polymer can be produced efficiently in a short time, and hence a water absorber can be provided at lower cost.

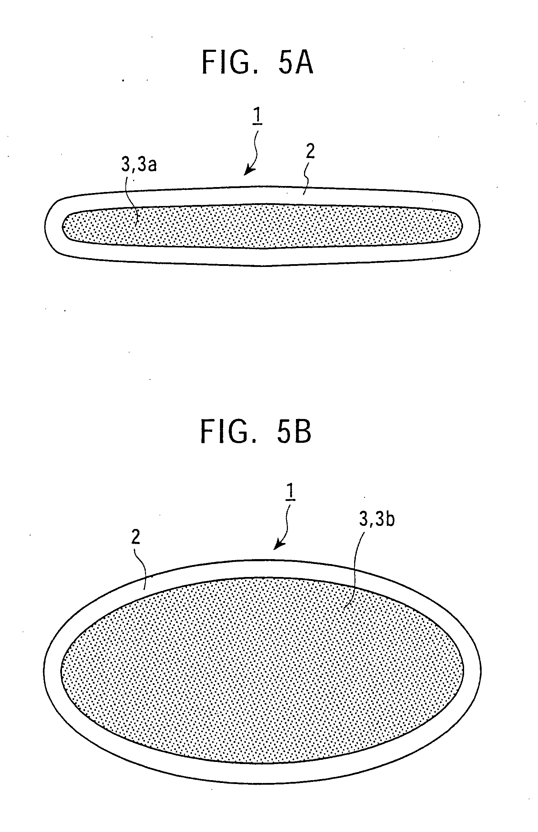

Hereinafter, Embodiments 5 and 6 of the present invention will be described with reference to Figs. 5A to 6B.

First, Embodiment 5 of the present invention is described.

Figs. 5A and 5B are diagrammatic cross-sectional views of a water absorber 1 of another preferred embodiment of the present invention, showing the construction of the water absorber. Specifically, Fig. 5A is a diagrammatic cross-sectional view of the water absorber 1 before absorbing water, and Fig. 5B is a diagrammatic cross-sectional view of the water absorber 1 after absorbing water.

The water absorber 1 includes a water-permeable bag-shaped casing 2 that is formed by shaping a sheet-form material having water-permeability into bag form, and water-absorbing resins 3a, 3b enclosed in the water-permeable bag-shaped casing 2.

In this preferred embodiment of the present invention, the water-absorbing resins 3a, 3b are obtained by subjecting to acid treatment a polymer material comprising acrylonitrile and at least one unit selected from the group consisting of styrene and a conjugated diene (e.g., butadiene or isoprene) to obtain a modified polymer, and drying the modified polymer and reducing the particle diameter of the dried polymer particle.

In the construction of the polymer material, for example, the polymer material constituting the water absorbers 100, 110 in Embodiments 3 and 4 can be used. Such polymer material and the method for producing the same are respectively the same as the above polymer material and fabrication method, and therefore, descriptions in detail are omitted.

In such embodiment, the reaction product in a gel form, which is produced by the above method for producing the polymer material and dried, is a bulk material having relatively high hardness. Such a bulk material may not exhibit a satisfactory effect as the water-absorbing resins 3a, 3b. Therefore, in this embodiment, this bulk material is fine grained by grinding or the like and sieved if desired. As a method for fine graining the reaction product, the above reaction product in a gel form may be dried through spray drying.

The fine grained water-absorbing resins 3a, 3b preferably have an average particle diameter in a dry state of about 0.001 to 5 mm, more preferably about 0.01 to 1 mm. When the particle diameter is too large, the water-absorbing and swelling rate of the water-absorbing resins 3a, 3b in a dry state has a disadvantage of not increasing. On the other hand, when the particle diameter is too small, the particles of the water-absorbing resins 3a, 3b disadvantageously permeate through the water-permeable bag-shaped casing 2 to flow out.

The water-permeable bag-shaped casing 2 is a bag formed from a sheet through which a liquid permeates, and this sheet is, if desired, formed by a plurality of layers. As a material for the water-permeable bag-shaped casing 2, cloth made of a natural fiber or a synthetic fiber can be used. Examples of natural fibers include cotton, jute, and silk. Examples of synthetic fibers include polyamide, polyimide, polyester, polyethylene, and polypropylene. Such cloth may be obtained by knitting the above fibers individually or in combination. Alternatively, non-woven or a film having pores formed in the surface and interior portions may be used

As shown in Fig. 5, the water-permeable bag-shaped casing 2 is filled with the thus formed water-absorbing resins 3a, 3b, and the inlet of the water-permeable bag-shaped casing 2 is sealed up so that the water-absorbing resins 3a, 3b do not flow out.

The thus constructed water absorber 1 has a water-absorbing property, and by using the water absorber 1, it is possible to remove unnecessary residual water that results from leakage or flooding.

In addition, when the water-absorbing resin 3a in a dry state absorbs water, as shown in Fig. 5B, the water-absorbing resin 3a increases in volume and weight and is changed to a water-absorbing resin 3b in a gel form. Further, the resultant water-absorbing resin 3b has a satisfactory external shape conformation property, and the water absorber 1, which has absorbed water, can function as a sandbag that can satisfactorily deal with overflowing, etc.

Further, when the water-absorbing resin 3b, which has absorbed water and increased in volume, is dried, it is changed to the water-absorbing resin 3a, which is small both in volume and weight. Thus, it can repeatedly function as a sandbag before and after absorbing water.

As mentioned above, in this embodiment, the water absorber 1 is produced by filling the water-permeable bag-shaped casing 2 with the water-absorbing resins 3a, 3b prepared by a method in which the polymer material including acrylonitrile and at least one unit selected from the group consisting of styrene and a conjugated diene is subjected to acid treatment, and the resultant product is fine grained so that the average particle diameter becomes 5 mm or less. Therefore, the water absorber can absorb and remove the residual water that results from leakage or flooding.

In addition, the water-absorbing resins 3a, 3b absorb water to be gelled and increase in volume and weight while maintaining a satisfactory external shape conformation property. Therefore, the water absorber 1 can be carried in a state such that the water-absorbing resin 3a is dried, and can absorb water during the use as a sandbag to increase in volume and weight. Thus, by using the water absorber 1, it is possible to satisfactorily deal with overflowing, etc., in the actual use while securing the convenience in transportation.

Further, the water absorber 1 may contain a surfactant. In this case, the surfactant permeates the water-permeable bag-shaped casing 2 and water-absorbing resins 3a, 3b constituting the water absorber 1, thus making it possible to improve the water-absorbing rate of the water absorber 1. As the surfactant used, anionic surfactants, cationic surfactants, nonionic surfactants, and ampholytic surfactants are preferred, and especially preferred are anionic surfactants and nonionic surfactants. By using an anionic surfactant and/or a nonionic surfactant, the ionic group formed in the water-absorbing resins 3a, 3b, especially acid group is prevented from forming a salt with the organic cation in a surfactant, that is, the ionic group is prevented from being hydrophobic, so that lowering of the water-absorbing property of the water-absorbing resin can be prevented.

Examples of anionic surfactants include fatty acid esters, higher alcohol sulfates, liquid fatty oil sulfate salts, aliphatic amines, sulfate salts of aliphatic amides, fatty alcohol phosphate salts, sulfonic acid salts of dibasic fatty acid esters, sulfonic acid salts of fatty amides, and naphthalenesulfonic acid salts obtained by formalin condensation. Examples of cationic surfactants include aliphatic amine salts, quaternary ammonium salts, and alkylpyridinium salts. Examples of nonionic surfactants include polyoxyethylene alkyl ethers, polyoxyethylene alkylphenol ethers, polyoxyethylene alkyl esters, sorbitan alkyl esters, and polyoxyethylene sorbitan alkyl esters.

Further, the amount of the surfactant added is preferably about 0.01 to 10% by weight, more preferably about 0.1 to 5% by weight, based on the weight of the water-permeable bag-shaped casing 2 and the water-absorbing resin 3a in a dry state. When the amount of the surfactant added is too large, the surfactant is possibly liberated from the water-absorbing resin 3b after absorbing water, disadvantageously causing pollution of the outside of the water absorber. On the other hand, when the amount of the surfactant added is too small, the effect of improving the water absorber 1 in water-absorbing rate aimed at by addition of the surfactant cannot be disadvantageously exhibited.

Next, Examples of the water absorber 1 according to this embodiment will be described. The following Examples should not be construed as limiting the scope of the present invention.

### Example 1

A bag was prepared from thick cotton cloth as a water-permeable bag-shaped casing, and the water-absorbing resin produced as described below was placed in the above bag and sealed up.

### (Fabrication of water-absorbing resin)

To 30 parts by weight of concentrated sulfuric acid (96 % by weight) was added 1 part by weight of a scrap ABS resin (black portion of a card panel of an 8 mm cassette tape, comprising 52 % by mole of styrene, 28 % by mole of acrylonitrile, and 20 % by mole of butadiene, and further containing 2 % by weight of carbon black, ground by a freezing shredder and classified into 16 to 32 mesh) to effect a reaction at 80°C for 20 minutes.

After completion of the reaction, the solid material in the reaction system was taken out by filtration using a glass filter and washed with water, and then, neutralized by 50 parts by weight of a 1 M aqueous solution of sodium hydroxide. The solid material was further washed with water in a satisfactory amount, and, at a point in time when the pH of the filtrate reached 8 or lower, the solid material was removed and dried in an air circulation dryer at 105°C for 2 hours.

By the above procedure, a black solid material was obtained. From the result of the elemental analysis for sulfur, it was confirmed that the content of the sulfonic acid group in the solid material was 33 % by mole, based on the mole of the all monomer units. In addition, the sodium contained was almost equimolar (1.1) to the sulfonic acid group. This black solid material was ground so that the average particle diameter became 0.8 mm.

### Example 2

A water absorber was produced in substantially the same manner as in Example 1 except that the black solid material was ground so that the average particle diameter became 0.5mm.

### Comparative Example

A water absorber was produced in substantially the same manner as in Example 1 except that the black solid material was not ground. In this case, the average particle diameter of the water-absorbing resin was 8 mm.

### (Results of comparison)

The water absorbers having the same size obtained in Examples 1 and 2 and Comparative Example were immersed in water having a depth of 1 cm and a uniform surface, and the water absorbing and swelling rates were individually estimated from the changes in the thickness of the water absorbers. Before immersion, all the water absorbers had substantially the same thickness, but, after 1 minute, the thickness of the water absorber of Example 1 was 2.9 cm and that of Example 2 was 3.2 cm, whereas that of Comparative Example was 1.6 cm. From this result, it is apparent that the water-absorbing property can be improved by reducing the particle diameter of the solid material.

Next, Embodiment 6 of the present invention is described.

This embodiment is an example of a modification of Embodiment 5, and different from Embodiment 5 only in that a solid material having a specific gravity of 1 or more is contained in the water-absorbing resin. Below, explanation is mainly made on a point of the difference between this embodiment and Embodiment 5, and descriptions for the common construction are omitted.

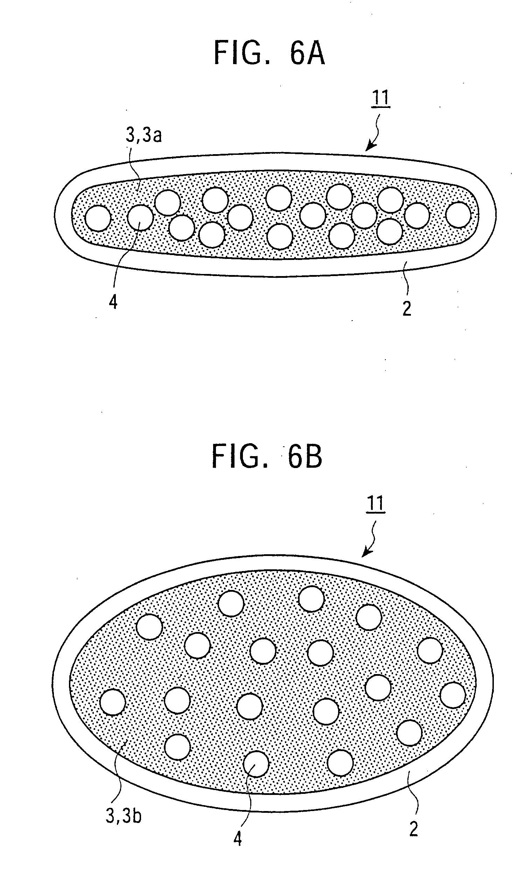

Figs. 6A and 6B are diagrammatic cross-sectional views of a water absorber 11 in this embodiment, showing the construction of the water absorber. Specifically, Fig. 6A is a diagrammatic cross-sectional view of the water absorber 11 before absorbing water, and Fig. 6B is a diagrammatic cross-sectional view of the water absorber 11 after absorbing water.

Like Embodiment 5, the water absorber 11 has a construction such that a water-permeable bag-shaped casing 12 is filled with water-absorbing resins 13a, 13b, and the inlet of the water-permeable bag-shaped casing 12 is sealed up. As mentioned above, this embodiment is different from Embodiment 5 in that a solid material 14 having a specific gravity of 1 or more is contained in the water-absorbing resins 13a, 13b.

As the solid material 14, for example, materials having magnetic properties described in Embodiments 3 and 4 can be used. Such materials having magnetic properties are the same as those in Embodiments 3 and 4, and therefore descriptions are omitted.

As mentioned above, in each of Embodiments 5 and 6, the water absorber is produced by filling the water-permeable bag-shaped casing with the water-absorbing resin prepared by a method in which the polymer material comprising acrylonitrile and at least one unit selected from the group consisting of styrene and a conjugated diene is subjected to acid treatment, and the resultant product is fine grained so that the average particle diameter becomes 5 mm or less. Therefore, the water absorber can absorb and remove the residual water that results from leakage or flooding.

In addition, in each of Embodiments 5 and 6, the water-absorbing resin absorbs water to be gelled and increases in volume and weight while maintaining a satisfactory external shape conformation property. Thus, by using the water absorber of the present invention, it is possible to satisfactorily deal with overflowing, etc., in the actual use while securing the convenience in the transportation.

Although the invention has been described in its preferred form with a certain degree of particularity, obviously many changes and variations, as well as combinations are possible therein. It is therefore to be understood that the present invention may be practiced other than as specifically described herein without departing from the scope thereof.

## Claims

1. A water absorber comprising a water-permeable casing and an antibacterial water-absorbing agent in the water-permeable casing, the antibacterial water-absorbing agent comprising a modified polymer compound obtainable from raw material including an organic polymer material comprising acrylonitrile and at least one unit of styrene or a conjugated diene, wherein
the modified polymer compound has an acid group introduced thereto as a substituent wherein the acid group is in the form of a metal salt.

2. The water absorber according to claim 1, further comprising an additional water-absorbing agent in the water-permeable casing, wherein the additional water-absorbing agent is obtainable from a raw material including an organic polymer material comprising acrylonitrile or at least one unit of styrene and a conjugated diene, and having an ionic group introduced thereto as a substituent by an acid treatment.

3. The water absorber according to claim 1, wherein the metal salt is a salt of at least one of zinc, copper, or silver.

4. The water absorber according to claim 1 or 2, wherein the modified polymer compound is obtainable from a starting material including an organic polymer material comprising acrylonitrile and at least one unit of styrene or a conjugated diene, wherein the organic polymer material is recovered from scrap material.

5. The water absorber according to claim 1, further comprising solid material having a specific gravity of 1 or more added to the modified polymer compound in the water-permeable casing.

6. The water absorber according to claim 5, wherein the solid material comprises a natural mineral or solid waste.

7. The water absorber according to claim 5, wherein the solid material is obtainable by binding solid waste together.

8. The water absorber according to claim 5, wherein the solid material is scrap material having magnetic properties.

9. A method for producing a water-absorber including a water permeable casing and an antibactrial water absorbing agent in the water permeable casing, the antibacterial water-absorbing agent comprising a modified polymer compound obtained from raw material including organic polymer material comprising acrylonitrile and at least one unit of styrene or a conjugated diene, the method comprising:
an acid treatment step for reacting the organic polymer material with an acid for introducing an acid group as a substituent into the organic polymer material; and
a metal treatment step for reacting the organic polymer material obtained in the acid treatment step with a metal salt to form a metal salt of the acid group.

10. The method according to claim 9, wherein the acid used in the acid treatment step is an inorganic acid.

11. The method according to claim 10, wherein the inorganic acid is concentrated sulfuric acid having a concentration of 70 % by weight or more.

12. The method according to claim 9, wherein, in the metal treatment step, a salt of zinc, copper or silver is formed.

13. The method according to claim 9, wherein an organic polymer material including acrylonitrile and at least one unit of styrene or a conjugated diene recovered from scrap material is used as the raw material of the modified polymer compound.

14. A water absorber comprising a water-permeable casing filled with water-absorbing resin, wherein
(a) the water-absorbing resin is a modified polymer obtainable by subjecting to acid treatment a polymer material comprising acrylonitrile and at least one unit of styrene or a conjugated diene;
(b) the modified polymer absorbs water to be gelled; and
(c) the water-absorbing resin has an average particle diameter of 5 mm or less when in the dry state.

15. The water absorber according to claim 14, wherein the water-absorbing resin has an average particle diameter of 1 mm or less when in the dry state.

16. The water absorber according to claim 14, wherein at least part of the acrylonitrile and at least one unit of styrene or a conjugated diene comprises scrap material.

17. The water absorber according to claim 14, wherein the water-permeable casing and the water-absorbing resin contain a surfactant.

18. The water absorber according to claim 14, wherein the polymer material contains inorganic substance.

19. The water absorber according to claim 14, wherein the polymer material contains solid material having a specific gravity of 1 or more.

20. The water absorber according to claim 19, wherein the solid material is a magnetic material.

21. The water absorber according to claim 14, wherein, after absorbing water, the water-absorbing resin increases in volume and weight while maintaining an external shape conformation property.

22. A method for producing a water absorber including a water permeable casing filled with water-absorbing resin, the method comprising:
(a) subjecting to acid treatment a polymer material comprising acrylonitrile and at least one unit of styrene or a conjugated diene; and
(b) fine graining the water-absorbing resin obtained by the acid treatment so that the resultant water-absorbing resin has an average particle diameter of 5 mm or less when in dry state.

23. The method according to claim 22, wherein at least part of the acrylonitrile and at least one unit of styrene or a conjugated diene is obtained from a starting material comprising scrap material.

24. The method according to claim 22, wherein the polymer material is divided into small pieces before the acid treatment.

25. The method according to claim 22, further comprising incorporating a surfactant into the water-permeable casing and the water-absorbing resin.

26. The method according to claim 22, wherein the polymer material contains inorganic substance.

27. The method according to claim 22, wherein the polymer material contains solid material having a specific gravity of 1 or more.

28. The method according to claim 27, wherein the solid material is a magnetic material.

29. A water absorber comprising a water-permeable casing and a water-absorbing polymer in form of small pieces including a powder form and a particulate form enclosed in the water-permeable casing, wherein
(a) the water-absorbing polymer is a modified polymer obtainable by subjecting to acid treatment a polymer material comprising acrylonitrile and at least one unit of styrene or a conjugated diene, wherein the modified polymer absorbs water to be gelled; and
(b) at least one component of the water-permeable casing and the water-absorbing polymer contains a surfactant.

30. The water absorber according to claim 29, further comprising a solid material having a specific gravity of one or more in form of small pieces including powder form and particulate form, in the water-permeable casing.

31. The water absorber according to claim 29, wherein the surfactant is at least one of an anionic surfactant and a nonionic surfactant.

32. The water absorber according to claim 29, wherein either
(a) the surfactant is contained in an amount of 0.01 to 10 parts by weight, relative to 100 parts by weight of the water-absorbing polymer in dry state and relative to 100 parts by weight of the water-permeable casing when in dry state or;
(b) the surfactant is contained in an amount of 0.1 to 5 parts by weight, relative to 100 parts by weight of the water-absorbing polymer in dry state and relative to 100 parts by weight of the water-permeable casing when in dry state.

33. The water absorber according to claim 29, wherein the polymer material contains either
(a) 5 to 80 % by mole of an acrylonitrile unit; or
(b) 10 to 60 % by mole of an acrylonitrile unit; or
(c) 20 to 50 % by mole of an acrylonitrile unit.

34. The water absorber according to claim 29, wherein the polymer material contains either
(a) 20 to 95 % by mole of at least one unit of styrene and a conjugated diene; or
(b) 40 to 85 % by mole of at least one unit of styrene and a conjugated diene; or
(c) 50 to 80 % by mole of at least one unit of styrene and a conjugated diene.

35. The water absorber according to claim 29, wherein the polymer material contains carbon black or titanium oxide.

36. The water absorber according to claim 29, wherein the water-absorbing polymer is obtainable from a starting material comprising a polymer material from scrap material, the scrap material comprising acrylonitrile and/or at least one unit of styrene or a conjugated diene.

37. A method for producing a water absorber including a water-permeable casing and water-absorbing polymer in the form of small-pieces including powder form and particulate form enclosed in the water-permeable casing, the method comprising:
(a) subjecting to acid treatment a polymer material in form of small pieces comprising acrylonitrile and at least one unit of styrene or a conjugated diene to obtain water-absorbing polymer which is a modified polymer capable of absorbing water to be gelled; and
(b) enclosing a resultant water-absorbing polymer in form of small pieces in a water-permeable casing; wherein
before the enclosing step, a surfactant is incorporated into at least one component of the water-absorbing polymer and the water-permeable casing.

38. The method according to claim 37, wherein the water-absorbing polymer in form of small pieces is enclosed in the water-permeable casing together with a solid material having a specific gravity of 1 or more in form of small pieces including a powder form and a particulate form.

39. The method according to claim 37, wherein the polymer material in form of small pieces contains carbon black or titanium oxide.

40. The method according to claim 37, wherein the form of small pieces water-absorbing polymer is obtained from a starting material including a polymer material from scrap material, comprising acrylonitrile and at least one unit of styrene or a conjugated diene.
